# EUROPÄISCHE PATENTANMELDUNG

(11) **EP 2 696 051 A1**
(43) Veröffentlichungstag der Anmeldung: **12.02.2014**
(21) Anmeldenummer: 12179726.0
(22) Anmeldetag: 08.08.2012
(51) Int. Cl.: F02B 23/06

(54) **Direkteinspritzende Brennkraftmaschine**

(71) Anmelder: Waldland Naturstoffe GmbH, 3533 Friedersbach (AT)
(72) Erfinder: Spandl, Stefan, 2011 Sierndorf (AT)
(74) Vertreter: Oberhardt, Knut

(57) **Zusammenfassung**

Die Erfindung geht aus von einer direkteinspritzenden Brennkraftmaschine mit wenigstens einem Zylinder und einem Kolben (1), wobei der Kolben (1) eine Brennraummulde (2) mit einem zur Mitte hin nach oben gewölbten Muldenboden (3) aufweist, und mit einer Einspritzdüse (4), die wenigstens einen Kraftstoffstrahl (6) erzeugt, dessen Mittellinie (7) annähernd parallel zu dem Muldenboden (3) verläuft. Erfindungsgemäß ist die Einspritzdüse (4) so positioniert ist, dass bei einem Beginn der Haupteinspritzung in einem Bereich zwischen 6° und 0° vor OT die Mittellinie (7) des Kraftstoffstrahls (6) den aus der Aufwärtsbewegung des Kolbens resultierenden Achsialdrall (9) der Verbrennungsluft so unterhalb der Drehachse (10) des Achsialdralls (9) trifft, dass der Achsialdrall (9) beschleunigt wird.

## Beschreibung

Die Erfindung betrifft eine direkteinspritzende Brennkraftmaschine nach dem Oberbegriff von Anspruch 1.

Bei direkteinspritzenden Brennkraftmaschinen, insbesondere bei dieselmotorischen Brennkraftmaschinen, wird häufig eine Kolbenform verwendet, bei der eine Brennraummulde vorgesehen ist, die einen nach oben gewölbten Muldenboden aufweist. Die Brennraummulde ist heute in den meisten Fällen rotationssymetrisch ausgebildet.

Bei der Aufwärtsbewegung des Kolbens wird die im Zylinder befindliche Verbrennungsluft komprimiert. Innerhalb der Brennraummulde wird die Luft während der Aufwärtsbewegung des Kolbens durch die mittige Aufwölbung des Muldenbodens nach außen verdrängt. Der Muldenboden geht dort in einer Rundung in die Muldenwand über, die so ausgeformt ist, dass die nach außen strömende Luft einen Drall erhält und in diesem Übergangsbereich zwischen Muldenboden und -wand eine Art sich drehender Walze bildet. In Fachkreisen ist dieser Effekt bekannt und wird als Tumble bezeichnet.

Durch drallbildend Organe oder eine tangentiale Ausrichtung des Lufteinlasskanals vor den Lufteinlassventilen erhält die Luft zusätzlich einen Rotationsimpuls, der sie in eine Drehung um die Mittelachse des Kolbens und innerhalb der Brennraummulde in eine Drehung um deren Mittelachse versetzt. Diese Rotation der Luft innerhalb des Zylinders und der Brennraummulde wirkt sich auch noch auf den Tumble aus. Die Drehung des Tumbles um die Brennraummuldenachse wird Swirl genannt.

Sinn dieser beiden Effekte ist es, vor dem Beginn der Verbrennung eine möglichst homogene Vermischung von Kraftstoff und Verbrennungsluft zu erreichen. Daraus ergibt sich eine sehr effektive Verbrennung mit geringer Entstehung von Rußpartikeln, unverbrannten Kohlenwasserstoffen, teilverbrannten Kohlenwasserstoffen und Kohlenmonoxyd.

Wird für den Betrieb einer direkteinspritzenden Brennkraftmaschine mit Einspritzdrücken um 1000 bar Dieselkraftstoff verwendet, so tritt bereits kurz nach Verlassen der Einspritzöffnungen eine starke Zerstäubung des Kraftstoffs ein. Die einzelnen Strahlen der Einspritzdüse werden sehr schnell aufgerissen und gehen in einen Nebel mit sehr feinen Tröpfchen über, die rasch verdampfen. Durch Tumble und Swirl wird dieser Dampf schnell und innig mit der Verbrennungsluft gemischt.

Etwas anders verhält es sich, wenn ein zähflüssigerer Kraftstoff, wie beispielsweise Pflanzenöl verwendet wird. Hier ist - abhängig von dem vorherrschenden Einspritzdruck - ein geringeres Aufreißen des Strahls zu beobachten. Daraus kann auch die Entstehung von größeren Tröpfchen und eine schlechtere Verdampfung der Tröpfchen aufgrund der geringeren Oberfläche resultieren. Die Kraftstofftröpfchen werden möglicherweise schlechter in der Verbrennungsluft verteilt und die Verdampfung ist zum Beginn der Verbrennung weniger vollständig abgeschlossen. Es kann folglich zu einer schlechteren Verbrennung und zur Bildung von Rußpartikeln kommen. Ebenso kann es vorkommen dass hochsiedende Bestandteile des Kraftstoffs zum Beginn der Verbrennung nicht vollständig verdampft sind und daher nicht vollständig verbrennen. Nach Verbrennungsende kondensieren solche unverbrannten Kohlenwasserstoffe an kühlen Bereichen des Verbrennungsraumes und des Auslasstraktes (Ventile, Kanäle, Turbolader, etc.). Diese Anlagerung von unverbranntem Kraftstoff bildet langfristig Verkokungen, welche zu Schäden führen können. Dies gilt insbesondere für den Niederlastbereich bei Leerlaufdrehzahl.

Der Erfindung liegt die Aufgabe zugrunde, eine direkteinspritzende Brennkraftmaschine nach dem Oberbegriff von Anspruch 1 so weiterzubilden, dass auch bei der Verwendung von zähflüssigen Kraftstoffen, wie beispielsweise Pflanzenöl, eine effektive Verbrennung und nur eine geringe Bildung von Rußpartikeln gewährleistet ist.

Gelöst wird die Aufgabe gemäß der Erfindung durch eine direkteinspritzende Brennkraftmaschine mit den Merkmalen von Anspruch 1. Weitere Einzelheiten und Vorteile der Erfindung ergeben sich aus den Unteransprüchen.

Erfindungsgemäß wird die Einspritzdüse so positioniert, dass bei einem Beginn der Haupteinspritzung in einem Bereich zwischen 6° und 0° Kurbelwinkel vor OT die Mittellinie des Kraftstoffstrahls so in den aus der Aufwärtsbewegung des Kolbens resultierenden Axialdrall (Tumble) der Verbrennungsluft unterhalb der Drehachse des Axialdralls eintritt, dass der Axialdrall beschleunigt wird.

Mit OT ist definitionsgemäß die Stellung des Kolbens im oberen Totpunkt gemeint. Als Einspritzbeginn ist die Kolbenstellung zu verstehen, bei der die Einspritzung angesteuert wird. Bis sich tatsächlich Kraftstoff im Brennraum befindet kann der Kolben seine Stellung noch um 1-2° Kurbelwinkel verändert haben. Als Haupteinspritzung wird diejenige Einspritzung definiert, bei der die Hauptmenge des Kraftstoffs eingebracht wird, unabhängig davon, ob der gesamte Kraftstoff während einer einzigen Einspritzphase eingespritzt wird, oder ob mehrere Einspritzungen pro Arbeitshub vorgesehen sind.

Da der Strahl eines eingespritzten zähen Kraftstoffes abhängig vom Einspritzdruck weniger stark aufreißt als der Strahl eines dünnflüssigen Kraftstoffs, vergeht eine längere Zeitspanne, bis ein zündfähiges Gemisch aus Luft und Kraftstoff in dem Brennraum entsteht. Aus diesem Grund wird bei der Verwendung eines zähflüssigen Kraftstoffes im Niederlastbereich, insbesondere bei Leerlaufdrehzahl, der Beginn der Haupteinspritzung vor den oberen Totpunkt (OT) verlegt, während bei der Verwendung von Diesel im Niederlastbereich meist nach OT eingespritzt wird. Der relativ gering aufgefächerte Strahl des zähen Kraftstoffes trifft dann auf den Tumble und wird hier durch die Luftströmung weiter aufgerissen und verteilt.

Es hat sich jedoch herausgestellt, dass der Tumble durch das Auftreffen des Kraftstoffstrahls gebremst wird und an Drall-Geschwindigkeit verliert. Dies führt dazu, dass sich die Nebelbildung und damit die Verdampfung und die Vermischung des Dampfes mit der Verbrennungsluft verschlechtert.

Die Einspritzdüse wird deshalb so positioniert, dass der eingespritzte Strahl den Tumble nicht bremst, sondern ihn beschleunigt. Dies ist dann der Fall, wenn die Mittellinie des Kraftstoffstrahls zwischen der Drehachse des Tumbles und dem Muldenboden auf den Tumble auftrifft. Kraftstofftröpfchen aus dem eingespritzten Strahl werden dadurch von dem Tumble in dessen Drehrichtung mitgerissen.

Der Kraftstoff wird dadurch in feinere Tröpfchen aufgerissen, die aufgrund ihrer großen Oberfläche schneller in den dampfförmigen Zustand übergehen können. Dies gilt auch für hochsiedende Kohlenwasserstoffe im Kraftstoff, die noch vor Verbrennungsbeginn ebenfalls besser verdampft werden. Durch die erhöhte Drallgeschwindigkeit des Tumbles wird der Kraftstoffdampf auch besser und schneller mit der Verbrennungsluft vermischt, so dass zum Verbrennungsbeginn ein homogeneres Gemisch aus Kraftstoffdampf und Verbrennungsluft vorliegt.

Die Effektivität der Verbrennung steigt auf diese Weise, während die Bildung von Rußpartikeln reduziert wird. Auch die Bildung von anderen schädlichen Abgasbestandteilen lässt sich auf diese Weise reduzieren. Der Anteil an unverbrannten und teilverbrannten Kohlenwasserstoffen im Abgas geht zurück. Aufgrund der besseren Verbrennung verringert sich auch der Kraftstoffeintrag in das Motoröl. Durch die reduzierte Bildung von Partikeln und anderen unerwünschten Verbrennungsprodukten, sowie durch den geringeren Gehalt an unverbrannten Kohlenwasserstoffen im Abgas ergeben sich weniger Ablagerungen.

Grundsätzlich verbessert die erfindungsgemäße Maßnahme die Verbrennung auch bei Motoren, bei denen die Einspritzdüse schräg angeordnet ist. Besonders vorteilhaft wirkt sich die Erfindung aber aus, wenn die Einspritzdüse zentral entlang der Mittelachse des Kolbens angeordnet ist. Die vorteilhafte Wirkung ergibt sich bei dieser Anordnung der Einspritzdüse gleichmäßig in allen um die Mittel-Längsachse des Kolbens herum angeordneten Sektoren der Brennraummulde.

Die Einspritzdüse ist vorteilhaft als Mehrlochdüse ausgebildet. Die Einspritzöffnungen dieser Mehrlochdüse sind ringförmig um die Spitze der Einspritzdüse angeordnet, wobei die eingespritzten Kraftstoffstrahlen alle möglichst den gleichen Winkel zum Muldenboden aufweisen. Dies lässt sich erreichen, wenn die Mittelachsen aller Einspritzöffnungen alle den gleichen Winkel zur Mittel-Längsachse der Brennraummulde einnehmen. Die Beschleunigung des Tumbles gilt dann für alle Strahlen der Mehrlochdüse.

Die Erfindung lässt sich bei allen direkteinspritzenden Brennkraftmaschinen mit Hochdruckeinspritzung verwenden. Die meisten Vorteile ergeben sich jedoch, wenn die Einspritzdüse mit einem Common-Rail-System in Verbindung steht.

Mit dem, bei modernen Common-Rail-Systemen zur Verfügung stehenden, hohen Einspritzdruck kann auch der Strahl eines zähen Kraftstoffs so aufbereitet werden, dass der Kraftstoffstrahl zumindest nicht als geschlossener Strahl auf den Tumble auftrifft und vor dem Erreichen des Tumbles bereits in Tröpfchen zerlegt wird. Durch die erfindungsgemä-βe, hohe Drallgeschwindigkeit des Tumbles tritt dann ein weiteres Aufreißen des Kraftstoffs in sehr feine Tröpfchen ein.

Die große Oberfläche dieser feinsten Kraftstoffteilchen sorgt für eine schnelle Verdampfung. Tumble und Swirl bewirken eine homogene Vermischung des Kraftstoffdampfs mit der Verbrennungsluft. Es kann auf diese Weise mit zähem Kraftstoffs eine ähnlich effektive Verbrennung wie mit dünnflüssigem Dieselkraftstoff erreicht werden.

Die Erfindung wirkt sich positiv bei allen Kraftstoffarten aus. Die größten Vorteile ergeben sich jedoch bei einer Brennkraftmaschine die mit Pflanzenöl betreibbar ist. Während bei der Verwendung von Dieselkraftstoff der Strahl bereits kurz nach Verlassen der Einspritzdüse so stark aufgerissen ist, dass je nach Position der Einspritzdüse eine Beschleunigung oder Abbremsung der Drallgeschwindigkeit des Tumbles nur in geringem Ausmaß stattfindet, lassen sich bei der Verwendung von Pflanzenöl als Kraftstoff sehr große Unterschiede beobachten.

Weitere Einzelheiten und Vorteile der Erfindung ergeben sich aus der Beschreibung eines Ausführungsbeispiels, das anhand der Zeichnung eingehend erläutert wird.

Es zeigt:

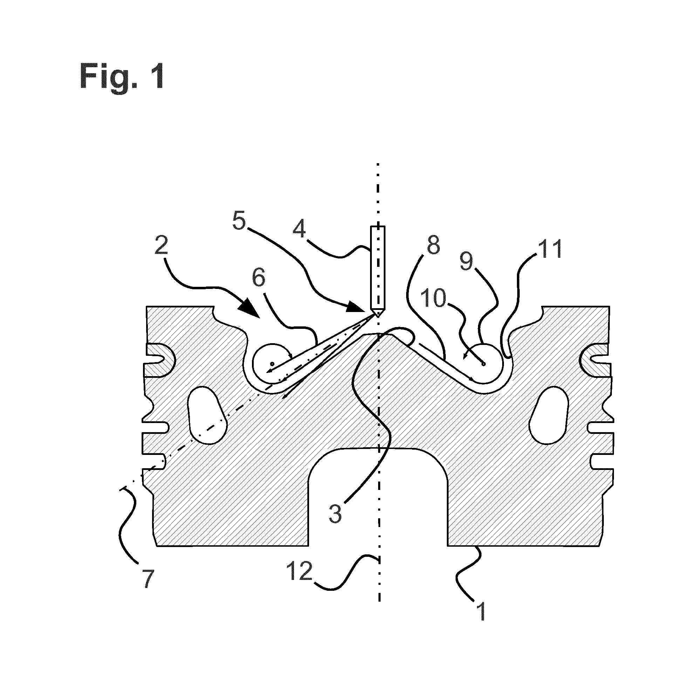

- Fig. 1: einen Schnitt durch eine erfindungsgemäße Anordnung

Die einzige Figur zeigt einen Kolben 1, wie er heute in direkteinspritzenden Dieselbrennkraftmaschinen eingesetzt wird. Der Kolben 1 weist eine Brennraummulde 2 auf, deren Muldenboden 3 nach oben gewölbt ist. Die Wölbung ist in dem gezeigten Ausführungsbeispiel im Schnitt kegelstumpfförmig ausgebildet. Nach außen hin geht die relativ gerade Rampe des Kegelstumpfs in einen Ringkanal 11 über, der einen Teil der Seitenwand der Brennraummulde 2 bildet.

Die Brennraummulde 2 ist rotationssymetrisch zur Mittel-Längsachse 12 dessen Kolbens 1 ausgebildet. Oberhalb der abgeschnittenen Kegelspitze des Muldenbodens 3 befindet sich entlang der Mittel-Längsachse 12 des Kolbens 1 die zentral angeordnete Einspritzdüse 4. Es handelt sich um eine Mehrlochdüse, deren Einspritzöffnungen ringförmig um die Spitze der Einspritzdüse 4 angeordnet sind, wobei die Achsen der Einspritzöffnungen alle im gleichen Winkel zu der Mittel-Längsachse 12 des Kolbens 1 ausgerichtet sind.

Bei der Aufwärtsbewegung des Kolbens 1 wird die im Zylinder befindliche Verbrennungsluft verdichtet. Durch die keilförmig schräg gestellten seitlichen Rampen der mittigen Aufwölbung des Muldenbodens 3 wird bei dieser Aufwärtsbewegung des Kolbens 1 die Verbrennungsluft nach außen verdrängt und es bildet sich eine Luftströmung 8 von der Mitte nach außen. Im Außenbereich der Brennraummulde 2 wird die Luftströmung 8 von dem Ringkanal 11 umgelenkt und bildet den Tumble 9 mit seiner Drehachse 10.

Die in Fig. 1 gezeigte Darstellung zeigt die Stellung des Kolbens 1 mit etwa 6° Kurbelwinkel vor OT. In dieser Stellung beginnt bei dem hier beschriebenen Beispiel im Leerlauf die Haupteinspritzung. Der Kraftstoffstrahl 6 mit seiner Mittelachse 7 ist nur schematisch dargestellt. Der Kraftstoffstrahl 6 wird zwar, je nach Einspritzdruck, mehr oder weniger stark aufgefächert, es wird sich jedoch nicht so eine klare Abgrenzung wie in der schematisierten Zeichnung ergeben. Während der Kraftstoffstrahl 6 im Außenbereich nur als eine Art Kraftstoffwolke existiert, wird seine Dichte zur Mittelachse 7 hin zunehmen. Diese Mittelachse 7 in deren Verlauf der Kraftstoff die höchste Dichte aufweist, verläuft fast parallel zu dem Muldenboden 3.

Der Abstand der Mittelachse 7 des Kraftstoffstrahls 6 zum Muldenboden 3 ist über die Position der Einspritzdüse 4 so ausgelegt, dass die Mittelachse 7 den Tumble 9 unterhalb seiner Drehachse 10 trifft. Da hier eine Stellung des Kolbens von 6° Kurbelwinkel vor OT gezeigt ist, wird die Mittelachse 7 bei einer Weiterbewegung des Kolbens weiter nach unten wandern und bis wenigsten zu einer Kolbenstellung von 6° Kurbelwinkel nach OT immer unterhalb der Drehachse 10 auf den Tumble 9 auftreffen. Es wird folglich während der gesamten Haupteinspritzung durch den Kraftstoffstrahl 6 ein beschleunigender Impuls auf den Tumble 9 ausgeübt.

Die Erfindung wirkt sich sowohl bei einmaliger Einspritzung pro Arbeitshub, als auch bei einer Mehrfacheinspritzung aus. Mit dem Begriff "Haupteinspritzung" ist hier entweder die Einspritzung gemeint, die bei einer normalen Einspritzung einmal pro Arbeitshub erfolgt, oder - im Falle einer Mehrfacheinspritzung - die den Hauptanteil der geleisteten Hubarbeit erbringt.

Durch die Beschleunigung des Tumbles 9 wird der in den Tumble eingespritzte Kraftstoff in feinste Tröpfchen zerrissen, die durch ihre große Oberfläche eine schnelle Verdampfung gewährleisten. Auch die homogene Vermischung des Kraftstoffs mit der Verbrennungsluft wird durch den schnell drehenden Tumble 9 verbessert.

Es kommt folglich auf diese Weise zu einer effektiveren Verbrennung und einer Reduzierung der Entstehung von Rußpartikeln. Auch die Entstehung von weiteren Schadstoffen im Abgas wird durch die effektivere Verbrennung minimiert.

### Bezugszeichenliste:

- 1: Kolben
- 2: Brennraummulde
- 3: Muldenboden
- 4: Einspritzdüse
- 5: Düsenlöcher
- 6: Kraftstoffstrahl
- 7: Mittelachse des Kraftstoffstrahls
- 8: Verbrennungsluft
- 9: Achsialdrall (Tumble)
- 10: Drehachse
- 11: Ringkanal
- 12: Mittel-Längsachse des Kolbens

## Patentansprüche

1. Direkteinspritzende Brennkraftmaschine mit wenigstens einem Zylinder und einem Kolben (1), wobei der Kolben (1) eine Brennraummulde (2) mit einem zur Mitte hin nach oben gewölbten Muldenboden (3) aufweist, und mit einer Einspritzdüse (4), die wenigstens einen Kraftstoffstrahl (6) erzeugt, dessen Mittellinie (7) annähernd parallel zu dem Muldenboden (3) verläuft, **dadurch gekennzeichnet, dass** die Einspritzdüse (4) so positioniert ist, dass bei einem Beginn der Haupteinspritzung in einem Bereich zwischen 6° und 0° Kurbelwinkel vor OT die Mittellinie (7) des Kraftstoffstrahls (6) den aus der Aufwärtsbewegung des Kolbens resultierenden Achsialdrall (9) der Verbrennungsluft so unterhalb der Drehachse (10) des Achsialdralls (9) trifft, dass der Achsialdrall (9) beschleunigt wird.

2. Direkteinspritzende Brennkraftmaschine nach Anspruch 1, **dadurch gekennzeichnet, dass** die Einspritzdüse (4) zentral entlang der Mittel-Längsachse (12) des Kolbens (1) angeordnet ist.

3. Direkteinspritzende Brennkraftmaschine nach einem der Ansprüche 1 bis 2, **dadurch gekennzeichnet, dass** die Einspritzdüse (4) als Mehrlochdüse ausgebildet ist.

4. Direkteinspritzende Brennkraftmaschine nach einem der Ansprüche 1 bis 2, **dadurch gekennzeichnet, dass** die Einspritzdüse (4) mit einem Common-Rail-System in Verbindung steht.

5. Direkteinspritzende Brennkraftmaschine nach einem der Ansprüche 1 bis 2, **dadurch gekennzeichnet, dass** die Brennkraftmaschine mit Pflanzenöl betreibbar ist.
